# EUROPÄISCHE PATENTSCHRIFT

(11) **EP 0 644 209 B1**
(45) Veröffentlichungstag und Bekanntmachung des Hinweises auf die Patenterteilung: **26.06.1996**
(21) Anmeldenummer: 94114491.7
(22) Anmeldetag: 15.09.1994
(51) Int. Cl.: C08F 14/26

(54) **Polytetrafluorethylen-Mikropulver, ihre Herstellung und Verwendung**
Micro-powder of polytetrafluoroethylene, its production and its use
Micropoudre de polytétrafluoréthylène, sa fabrication et son utilisation

(30) Priorität: 21.09.1993 DE 4331971
(43) Veröffentlichungstag der Anmeldung: 22.03.1995
(73) Patentinhaber: HOECHST AKTIENGESELLSCHAFT, D-65926 Frankfurt am Main (DE)
(72) Erfinder: Mayer, Ludwig, Dr., D-84489 Burghausen (DE); Tönnes, Kai-Uwe, Dr., D-55278 Köngernheim (DE); Blädel, Hermann, Dipl.-Ing., D-84547 Emmerting (DE)

(56) Entgegenhaltungen:
- EP-A- 0 271 243
- US-A- 3 629 219

## Beschreibung

Die Erfindung betrifft neue Polytetrafluorethylen-(PTFE)-Mikropulver oder -Wachse, die durch eine Molgewichtsverteilungsbreite M_{W}/Mₙ von 1,5 bis 2,5, vorzugsweise 1,5 bis 2 und eine spezifische Oberfläche (nach BET) von 7 bis 13 m²/g, vorzugsweise 8 bis 12 m²/g, hergestellt aus einer Dispersion mit der Primärpartikelgröße von 150 bis 250 nm gekennzeichnet sind. Die Erfindung betrifft außerdem ein Verfahren zur Herstellung dieser neuen Mikropulver, ihre Verwendung zur Herstellung von Polyacetal-Zubereitungen, die so erhaltenen Zubereitungen und deren Verwendung.

Die erfindungsgemäßen Mikropulver bestehen aus Tetrafluorethylen-(TFE)-Einheiten und gegebenenfalls in geringem Ausmaß an mit TFE copolymerisierbaren Einheiten von Monomeren, beispielsweise ein niederes Perfluoralken wie Hexafluorpropen, oder einem niederen Perfluoralkylvinylether wie Perfluorpropylvinylether. Diese Comonomeren sind im Polymer bis zu etwa 3 Gew.-%, vorzugsweise bis zu 2 Gew.-%, enthalten.

Die Molgewichtsverteilungsbreite der neuen Mikropulver, ausgedrückt durch das Verhältnis mittlere Molmasse M_{w} zu Zahlenmittel Mₙ, wird nach der von Tuminello et al., Makromolecules 21 (1988) 2606 bis 2610 beschriebenen Methode bestimmt. Diese Autoren hatten bereits ein niedermolekulares PTFE durch Polymerisation von TFE mit Dibernsteinsäureperoxid (und damit im organischen Medium) und mit einem Kohlenwasserstoff als Kettenübertragungsmittel hergestellt.

Die neuen Mikropulver werden durch Polymerisation von TFE, gegebenenfalls mit den obengenannten modifizierenden Comonomeren, im wäßrigen Medium in Gegenwart von Wasserstoff, Methan oder Ethan als Kettenübertragungsmittel und anorganischen Initiatoren bei einem über die Polymerisationszeit im wesentlichen konstant bleibenden Radikalangebot erhalten.

Das im wesentlichen konstant bleibende Angebot von Radikalen bedeutet, daß man die Initiatoren, abhängig von der Zerfallsgeschwindigkeit des Initiators, entweder auf einmal oder im wesentlichen gleichmäßig über die Polymerisationszeit verteilt zugibt und die übrigen Parameter wie Temperatur, Durchmischung und Monomerzugabe im wesentlichen konstant hält.

Geeignete Initiatoren sind vor allem anorganische Peroxoverbindungen wie Persulfate, insbesondere Alkali- oder Ammoniumpersulfat, oder auch Permanganate. Die Persulfate werden vorteilhaft im Temperaturbereich von 50 bis 90 °C, insbesondere bei etwa 70 °C, und Permanganate bei Temperaturen von 20 bis 40 °C, insbesondere etwa 30 °C, eingesetzt.

Im übrigen verläuft die Polymerisation in an sich bekannter Weise.

Die neuen Mikropulver eignen sich vor allem als Zusätze beziehungsweise "Modifikatoren" für Polyacetale wie Polyoxymethylen. Der Zusatz der neuen Mikropulver bewirkt eine erhebliche Verringerung der Beläge in den Formen bei der Schmelzverarbeitung. Weiterhin wird die Farbstabilität erheblich verbessert, so daß die damit erhaltenen Formkörper nicht mehr die zum Teil erheblichen braunen Verfärbungen aufweisen, die mit den bisher gebräuchlichen Mikropulvern als Modifikatoren auftraten.

Die neuen Mikropulver werden den Polyacetalen üblicherweise in Mengen bis zu 25 Gew.-%, vorzugsweise 10 bis 20 Gew.-%, zugemischt. Die Erfindung betrifft deshalb auch Polyacetal-Zubereitungen mit einem Gehalt an 5 bis 25 Gew.-%, vorzugsweise 10 bis 20 Gew.-%, an erfindungsgemäßem Mikropulver. Weiterhin betrifft die Erfindung die Verwendung dieser Zubereitungen zur Schmelzverarbeitung.

Die Erfindung wird in den folgenden Beispielen näher erläutert. Prozentangaben sind Gewichtsprozente.

Der Schmelzindex (melt flow index) MFI wird nach DIN 53 735 beziehungsweise ASTM D-1238 bei 372 °C und der angegebenen Last mit einem Düsendurchmesser von 2,08 mm bestimmt.

### Beispiel 1

In einen innen emaillierten Polymerisationsreaktor mit einem Gesamtvolumen von 195 l, versehen mit einem Impellerrührer, werden 118 l entsalztes Wasser eingefüllt und darin 120 g Ammoniumperfluoroctanoat (30%ig in Wasser) aufgelöst. Nach Abdichten des Reaktors wird zunächst fünfmal mit Stickstoff und anschließend einmal mit 1,0 bar TFE gespült.

Nach Entspannen und Aufheizen auf 68 °C werden über eine Leitung 0,12 bar Ethan unter mäßigem Rühren eingepumpt. Die Rührung wird dann auf 210 U/min erhöht. Sodann wird dem Reaktor über die Gasphase TFE zugeführt, bis der Gesamtdruck von 7,4 bar erreicht ist. Daraufhin startet man die Polymerisation durch Zupumpen von 10,0 g Ammoniumpersulfat, gelöst in 300 ml entsalztem Wasser.

Sobald der Druck zu fallen beginnt, wird über die Gasphase weiteres TFE gemäß dem Verbrauch ergänzt, so daß der Gesamtdruck von 7,4 bar aufrechterhalten wird. Die freiwerdende Wärme wird durch Kühlung der Kesselwand abgeführt und so die Temperatur von 68 °C aufrechterhalten.

Nach Einspeisung von 35,7 kg TFE in den Reaktor wird die Monomerzuführung unterbrochen, der Reaktor entspannt und mehrmals mit N₂ gespült.

| | | |
|---|---|---|
| Eigenschaften der Dispersion: | Primärpartikelgröße: | 200 nm |
| | pH-Wert: | 3,9 |

Ein Teil der erhaltenen Mikropulverdispersion wird wie folgt aufgearbeitet:

In ein 2-1-Glasgefäß mit 4-Blattrührer und Stromstörer gibt man 1 kg einer 12%igen Dispersion, die man durch Verdünnen mit entsalztem Wasser erhält. Aus dieser wird bei 1000 U/min und Raumtemperatur mit 5 ml konzentrierter Salzsäure das Polymere ausgefällt. Nach 10 min Nachrührzeit bei 1000 U/min wird dreimal mit 1 l entsalztem Wasser 2 min bei 1000 U/min gewaschen. Zur Trocknung wird das Pulver 15 h bei 230 °C getempert.

| Eigenschaften des Mikropulvers: | |
|---|---|
| MFI: 10 kg Last | 1,6 g/10 min |
| Partikelgröße: | 7 µm |
| Spezifische Oberfläche (BET): | 9,5 m²/g |
| M_{w}/Mₙ (Tuminello): | 1,75 |
| M_{w} (Tuminello): | 1,9 · 10⁵ g/mol |
| Farbe der Druck-Sinter-Platte: | weiß |

### Beispiel 2

Man verfährt wie in Beispiel 1, pumpt jedoch 0,35 bar Ethan ein und startet mit 15 g Ammoniumpersulfat.

| | | |
|---|---|---|
| Eigenschaften der Dispersion: | Primärpartikelgröße: | 175 nm |
| | pH-Wert: | 3,5 |

| Eigenschaften des Mikropulvers: | |
|---|---|
| MFI: 2,16 kg Last | 6,6 g/10 min |
| Partikelgröße: | 6 µm |
| Spezifische Oberfläche (BET): | 11,4 m²/g |
| M_{w}/Mₙ (Tuminello): | 1,56 |
| Mw (Tuminello): | 8,9 · 10⁴ g/mol |
| Farbe der Druck-Sinter-Platte: | weiß |

### Beispiel 3

Man verfährt wie in Beispiel 1, pumpt jedoch 0,05 bar Ethan und 395 g Hexafluorpropen (HFP) ein und startet ebenso mit 10 g Ammoniumpersulfat.

| | | |
|---|---|---|
| Eigenschaften der Dispersion: | Primärpartikelgröße: | 220 nm |
| | pH-Wert: | 3,4 |

| Eigenschaften des Mikropulvers: | |
|---|---|
| MFI: 10 kg Last | 0,7 g/10 min |
| Partikelgröße: | 12 µm |
| Spezifische Oberfläche (BET): | 8,8 m²/g |
| M_{w}/Mₙ (Tuminello): | 1,90 |
| Mw (Tuminello): | 2,6 · 10⁵ g/mol |
| Farbe der Druck-Sinter-Platte: | weiß |
| HFP-Gehalt (IR): | 1,6 Gew.-% |

### Beispiel 4

Man verfährt wie in Beispiel 1, pumpt jedoch 8 bar TFE, 2,3 bar Wasserstoff und 0,5 bar Hexafluorpropen ein und startet ebenso mit 10 g Ammoniumpersulfat.

| | | |
|---|---|---|
| Eigenschaften der Dispersion: | Primärpartikelgröße: | 210 nm |
| | pH-Wert: | 3,9 |

| Eigenschaften des Mikropulvers: | |
|---|---|
| MFI: 10 kg Last | 0,8 g/10 min |
| Partikelgröße: | 8,8 µm |
| Spezifische Oberfläche (BET): | 12,1 m²/g |
| M_{w}/Mₙ (Tuminello): | 1,83 |
| Mw (Tuminello): | 2,4 · 10⁵ g/mol |
| Farbe der Druck-Sinter-Platte: | weiß |
| HFP-Gehalt (IR): | 0,9 Gew.-% |

Vergleichsbeispiel (Herstellung analog DE-C 22 35 885)

In einen Polymerisationsreaktor mit einem Gesamtvolumen von 3600 l, versehen mit einem Ankerrührer und Blattstromstörer, werden 2550 l entsalztes Wasser und 7,3 kg NH₃ (25%ige wäßrige Lösung) eingefüllt und darin 2,2 kg Perfluoroctanoat (30%ig in Wasser) aufgelöst. Nach Abdichten des Reaktors wird zunächst fünfmal mit Stickstoff und anschließend einmal mit 1,0 bar TFE gespült.

Nach Entspannen und Aufheizen auf 33 °C werden über eine Leitung 66 ml Kupferstammlösung, bestehend aus 360 g CuSO₄ · 5H₂O, 9500 g entsalztem Wasser und 5 ml H₂SO₄, 1,25 l Chloroform und 222 g Natriumbisulfit (gelöst in 1 l entsalztem Wasser) unter mäßigem Rühren eingepumpt. Die Rührung wird dann auf 65 U/min erhöht. Sodann wird dem Reaktor über die Gasphase TFE zugeführt, bis der Gesamtdruck von 15 bar erreicht ist. Daraufhin startet man die Polymerisation durch Zupumpen von 351 g Ammoniumperoxodisulfat, gelöst in 1 l entsalztem Wasser.

Die Aufarbeitung verläuft analog Beispiel 1.

| | | |
|---|---|---|
| Eigenschaften der Dispersion: | Primärpartikelgröße: | 120 nm |
| | pH-Wert: | 9,0 |

| Eigenschaften des Mikropulvers: | |
|---|---|
| MFI: | 0,3 g/10 min |
| Partikelgröße: | 7 µm |
| Spezifische Oberfläche (BET): | 15,6 m²/g |
| M_{w}/Mₙ (Tuminello): | 3,6 |
| M_{w} (Tuminello): | 4,3 · 10⁵ g/mol |
| Farbe der Druck-Sinter-Platte: | braun |

## Patentansprüche

1. Polytetrafluorethylen-Mikropulver mit einem Gehalt an bis zu etwa 3 Gew.-% mit Tetrafluorethylen copolymerisierbaren Monomeren, gekennzeichnet durch eine Molgewichtsverteilungsbreite M_{w}/Mₙ von 1,5 bis 2,5 und eine spezifische Oberfläche (BET) von 7 bis 13 m²/g, hergestellt aus einer Dispersion mit der Primärpartikelgröße von 150 bis 250 nm.

2. Mikropulver nach Anspruch 1, gekennzeichnet durch eine Molgewichtsverteilungsbreite von 1,5 bis 2.

3. Mikropulver nach Anspruch 1 oder 2, gekennzeichnet durch einen Gehalt an bis zu 2 Gew.-% an copolymerisierbaren Monomeren.

4. Mikropulver nach einem oder mehreren der Ansprüche 1 bis 3, dadurch gekennzeichnet, daß das copolymerisierbare Monomere ein niederer Perfluoralkylvinylether oder Hexafluorpropen ist.

5. Verfahren zur Herstellung der Mikropulver nach einem oder mehreren der Ansprüche 1 bis 4, dadurch gekennzeichnet, daß man Tetrafluorethylen, gegebenenfalls mit einem damit copolymerisierbaren Monomeren, im wäßrigen Medium in Gegenwart von Wasserstoff, Methan oder Ethan als Kettenübertragungsmittel und anorganischen Initiatoren bei einem über die Polymerisationszeit im wesentlichen konstant bleibenden Radikalangebot polymerisiert.

6. Verfahren nach Anspruch 5, dadurch gekennzeichnet, daß als Initiator ein Persulfat oder Permanganat eingesetzt wird.

7. Verfahren nach Anspruch 5 oder 6, dadurch gekennzeichnet, daß die Polymerisation mit Alkali- oder Ammoniumpersulfat bei 50 bis 90 °C oder mit einem Alkalipermanganat bei Temperaturen von 20 bis 40 °C durchgeführt wird.

8. Verwendung der Mikropulver nach den Ansprüchen 1 bis 4 beziehungsweise der nach den Ansprüchen 5 bis 7 erhaltenen Mikropulver zur Hestellung von Polyacetal-Zubereitungen.

9. Zubereitung, gekennzeichnet durch einen Gehalt an einem Polyacetal und an einem Mikropulver nach den Ansprüchen 1 bis 4 beziehungsweise einem nach den Ansprüchen 5 bis 7 erhaltenen Mikropulver.

10. Verwendung einer Zubereitung nach Anspruch 9 zur Herstellung von Formkörpern durch Schmelzverarbeitung.

## Claims

1. A polytetrafluoroethylene micropowder containing up to about 3% by weight of monomers copolymerizable with tetrafluoroethylene, which has a polydispersity M_{w}/Mₙ of from 1.5 to 2.5 and a specific surface area (BET) of from 7 to 13 m²/g, produced from a dispersion having a primary particle size of from 150 to 250 nm.

2. A micropowder as claimed in claim 1, wherein the polydispersity is from 1.5 to 2.

3. A micropowder as claimed in claim 1 or 2, wherein the copolymerizable monomer is a lower perfluoro-(alkyl vinyl) ether or hexafluoropropene.

4. A process for preparing the micropowder as claimed in claim 1, 2 or 3, which comprises polymerizing tetrafluoroethylene, with or without a monomer copolymerizable therewith, in aqueous medium in the presence of hydrogen, methane or ethane as chain transfer agent and inorganic initiators at an availability of free radicals remaining essentially constant over the polymerization time.

5. The process as claimed in claim 4, wherein the initiator used is a persulfate or permanganate.

6. The process as claimed in claim 4 or 5, wherein the polymerization is carried out using alkali metal or ammonium persulfate at from 50 to 90°C.

7. The process as claimed in claim 4 or 5, wherein the polymerization is carried out using an alkali metal permanganate at temperatures of from 20 to 40°C.

8. Use of the micropowder as claimed in any of claims 1 to 3 or the micropowder obtained by the process claimed in any of claims 4 to 7 for the production of polyacetal preparations.

9. A preparation comprising a polyacetal and a micropowder as claimed in any of claims 1 to 3 or a micropowder obtained by the process claimed in any of claims 4 to 7.

10. Use of a preparation as claimed in claim 9 for the production of moldings by melt processing.

## Revendications

1. Micropoudre de polytétrafluoréthylène ayant une teneur en monomères copolymérisables avec le tétrafluoréthylène allant jusqu'à environ 3 % en masse, caractérisée par un indice de polydispersité M_{w}/Mₙ de 1,5 à 2,5 et une surface spécifique (BET) de 7 à 13 m²/g, préparée à partir d'une dispersion ayant une grosseur de particules initiale de 150 à 250 nm.

2. Micropoudre selon la revendication 1, caractérisée par un indice de polydispersité de 1,5 à 2.

3. Micropoudre selon la revendication ou 2, caractérisée en ce qu'elle contient jusqu'à 2 % en masse de monomères copolymérisables.

4. Micropoudre selon l'une ou plusieurs des revendications 1 à 3, caractérisée en ce que le monomère copolymérisable est un perfluoroalkylvinyléther inférieur ou l'hexafluoropropène.

5. Procédé de préparation des micropoudres selon l'une ou plusieurs des revendications 1 à 4, caractérisé en ce que l'on polymérise du tétrafluoréthylène, éventuellement avec un monomère pouvant se copolymériser avec lui, en milieu aqueux en présence d'hydrogène, de méthane ou d'éthane comme agent de transfert de chaîne, et d'amorceurs inorganiques dans des conditions dans lesquelles l'offre de radicaux reste essentiellement constante pendant toute la durée de la polymérisation.

6. Procédé selon la revendication 5, caractérisé en ce que l'on utilise comme amorceur un persulfate ou un permanganate.

7. Procédé selon la revendication 5 ou 6, caractérisé en ce que l'on effectue la polymérisation avec un persulfate de métal alcalin ou d'ammonium à des températures de 50 à 90°C ou avec un permanganate de métal alcalin à des températures de 20 à 40°C.

8. Utilisation des micropoudres selon les revendications 1 à 4 ou des micropoudres obtenues selon les revendications 5 à 7 pour la préparation de compositions de polyacétals.

9. Composition caractérisée en ce qu'elle contient un polyacétal et une micropoudre selon les revendications 1 à 4 ou une micropoudre obtenue selon les revendications 5 à 7.

10. Utilisation d'une composition selon la revendication 9 pour la préparation de corps moulés par mise en forme à l'état fondu.
